(19) Europäisches Patentamt
European Patent Office
Office européen des brevets

(11) **EP 2 554 941 B1**

## (12) FASCICULE DE BREVET EUROPEEN

(45) Date de publication et mention de la délivrance du brevet:
**18.06.2014 Bulletin 2014/25**

(51) Int Cl.:
***G01B 11/03*** *(2006.01)*   ***G01B 11/26*** *(2006.01)*

(21) Numéro de dépôt: **12179033.1**

(22) Date de dépôt: **02.08.2012**

(54) **Système optique de mesure d'orientation de casque à coins de cube et optique d'émission télécentrique**

Optisches Messsystem der Ausrichtung eines Helms mit Hilfe von Retroreflektoren und telezentrischer Emissionsoptik

Optical system for measuring the orientation of a helmet with corner cubes and telecentric transmission optic

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.08.2011 FR 1102463**

(43) Date de publication de la demande:
**06.02.2013 Bulletin 2013/06**

(73) Titulaire: **Thales**
**92200 Neuilly Sur Seine (FR)**

(72) Inventeurs:
• **Barbier, Bruno**
  **33000 BORDEAUX (FR)**
• **Potin, Laurent**
  **33230 COUTRAS (FR)**
• **Rouzes, Siegfried**
  **33185 LE HAILLAN (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**JP-A- 2007 521 462    US-A- 5 207 003**
**US-A1- 2008 218 728    US-B1- 6 486 955**

**Description**

Le domaine de l'invention est celui des dispositifs optiques permettant de mesurer l'orientation d'un objet dans l'espace sans contact. Il existe divers domaines d'applications possibles mais l'application principale est la détection de posture de casque de pilote d'aéronef, permettant ainsi de projeter dans sa visière une image en superposition exacte sur le paysage extérieur ou d'asservir différents systèmes de l'appareil sur son regard. La précision recherchée dans de tels systèmes est de l'ordre du milliradian.

Il existe différentes techniques optiques permettant de faire de la mesure d'orientation sur casque. Généralement, on installe sur le casque des éléments remarquables qui sont repérés par un système de caméras. La position des images de ces éléments remarquables permet de déterminer par calcul l'orientation du casque.

Ces éléments peuvent être passifs ou actifs. Les éléments passifs sont éclairés par une source externe. On peut utiliser, à cette fin, des coins de cube rétroréfléchissants qui permettent de réduire les problèmes de lumière parasite dus à l'éclairement solaire. Il suffit de disposer les organes optiques d'émission et de réception sur le même axe.

Les éléments actifs sont généralement des diodes électroluminescentes. Les caméras ont une distance fixe de mise au point et par conséquent une profondeur de champ nécessairement limitée.

Cette technique présente un certain nombre d'inconvénients. La qualité de l'image de chaque point imagé sur le détecteur dépend de la position du casque et de son orientation, limitant ainsi la précision du système si l'on souhaite couvrir un volume de mesure important ou une plage de rotation conséquente.

Le système selon l'invention remédie à ces deux inconvénients. Il comporte essentiellement, monté sur un bâti fixe d'orientation connue, un dispositif optique unique de type télécentrique d'émission et de réception de faisceaux de lumière parallèle. Les faisceaux émis sont issus d'une source ponctuelle, les faisceaux reçus proviennent de la retroréflexion de la lumière venant de la source par des rétroréflecteurs montés sur l'objet mobile dont on cherche à déterminer l'orientation.

On démontre qu'avec ce système de détection, la qualité de la mesure est, par construction, indépendante de l'orientation du casque. En outre, ses autres avantages sont les suivants :

- Un algorithme très simple de détermination de l'orientation ;
- Une adaptation possible de la direction d'éclairage à la position du casque ;
- Une grande insensibilité à l'éclairement solaire ;
- L'emploi de dispositifs entièrement passifs montés sur casque ne nécessitant ni câble de liaison, ni câble d'alimentation électrique.

Plus précisément, l'invention a pour objet un système de détection de la posture d'un objet mobile dans l'espace comprenant un dispositif fixe électro-optique d'orientation connue comprenant au moins une première source d'émission ponctuelle et un capteur matriciel photosensible et un ensemble comprenant trois dispositifs rétroréfléchissants, par exemple, de type « coin de cube » disposés sur l'objet mobile,
**caractérisé en ce que** le dispositif fixe électro-optique comporte une optique télécentrique comprenant essentiellement un objectif de projection, un objectif de réception et un élément optique semi-réfléchissant agencés de façon que :

la première source d'émission ponctuelle soit disposée au foyer de l'objectif de projection par réflexion ou par transmission à travers l'élément optique semi-réfléchissant,
l'image de la première source d'émission ponctuelle soit disposée au foyer de l'objectif de réception par transmission ou par réflexion à travers l'élément optique semi-réfléchissant,
le système de détection étant configuré pour déterminer ladite posture, se basant sur les écarts entre les images desdits trois dispositifs rétroréfléchissants sur ledit capteur matriciel photosensible.

Avantageusement, la première source d'émission ponctuelle ou son image est disposée sur l'axe optique commun à l'objectif de projection et à l'objectif de réception.

Avantageusement, le système comporte une seconde source d'émission ponctuelle, la seconde source d'émission ponctuelle ou son image étant disposée hors de l'axe optique commun à l'objectif de projection et à l'objectif de réception.

Avantageusement, dans une première variante, la première source émettant dans une première bande spectrale, la seconde source émet dans une seconde bande spectrale différente de la première bande spectrale de la première source. Dans une seconde variante, la première source émettant une lumière dans un premier état de polarisation prédéterminé, la seconde source émet une lumière dans un second état de polarisation prédéterminé différent du premier état de polarisation prédéterminé. Dans une troisième variante, la première source d'émission et la seconde source d'émission émettent à des instants différents

Avantageusement, le dispositif fixe comporte une matrice de sources d'émission ponctuelles.

Avantageusement, l'objet mobile comporte au moins quatre dispositifs rétroréfléchissants de type « coin de cube ». Chacun des dispositifs rétroréfléchissants de type coin de cube disposés sur l'objet mobile comporte des moyens de discrimination optique ou géométrique différents de ceux des autres coins de cube. Dans une première réalisation, chaque coin de cube comporte un cache de forme différente de celle des deux autres coins de cube. Dans une seconde réalisation, chaque coin de cube comporte un filtre optique dont la bande spectrale de transmission est différente de celle des deux autres filtres des deux autres coins de cube.

Préférentiellement, l'invention est adaptée pour être montée sur un casque de pilote.

L'invention sera mieux comprise et d'autres avantages apparaîtront à la lecture de la description qui va suivre donnée à titre non limitatif et grâce aux figures annexées parmi lesquelles :

La figure 1 représente un premier mode de réalisation du système de détection selon l'invention comportant une seule source ponctuelle ;
La figure 2 représente un second mode de réalisation du système de détection selon l'invention comportant deux sources ponctuelles distinctes ;
La figure 3 représente un troisième mode de réalisation du système de détection selon l'invention comportant une matrice de sources ponctuelles.

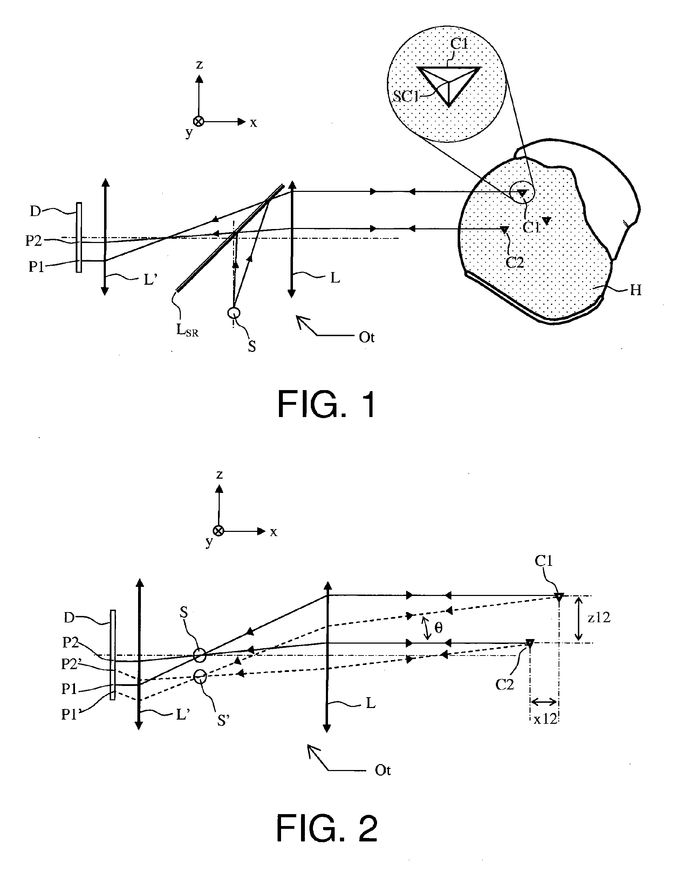

A titre de premier exemple de réalisation, la figure 1 représente un premier mode de réalisation du système de détection selon l'invention dans le cas le plus simple, c'est-à-dire comportant une seule source ponctuelle et dans le cadre d'une détection d'orientation d'un casque de pilote. On peut très facilement adapter cette première configuration à d'autres applications.

Le système comprend essentiellement deux sous-ensembles, un dispositif fixe électro-optique et un casque dont on cherche à déterminer l'orientation. Il est référencé dans un repère (O, x, y, z).

Le dispositif fixe électro-optique est situé dans le cockpit d'un aéronef et occupe une orientation connue par rapport au référentiel de l'aéronef.

Le dispositif électro-optique comprend une source de lumière S quasi-ponctuelle. Cette source peut être une diode électroluminescente ou une diode laser.

Il comprend également un système optique télécentrique Ot comportant un objectif de projection L, un objectif de réception L' et un élément optique semi-réfléchissant $L_{SR}$. L'objectif de projection L comme l'objectif de réception L' peuvent être constitués soit de lentilles simples soit de groupes de lentilles. L'élément optique semi-réfléchissant peut être soit une simple lame plane traitée comme représenté sur les différentes figures soit un cube séparateur. L'ensemble des objectifs de projection et de réception constituent un système afocal, c'est-à-dire que leur foyer est commun.

L'image de la source S est disposée au foyer de l'objectif de projection L par réflexion sur l'élément optique semi-réfléchissant $L_{SR}$. Par conséquent, l'image de S est collimatée à l'infini par l'objectif L qui émet ainsi un faisceau de lumière parallèle selon une direction x comme indiqué sur la figure 1. On peut indifféremment utiliser l'élément optique semi-réfléchissant $L_{SR}$ en réflexion sur la voie émission et en transmission sur la voie réception ou l'inverse.

Le casque H de la figure 1 est équipé d'au moins trois rétroréflecteurs C de type coin de cube. On sait que ces éléments optiques présentent la propriété de renvoyer la lumière dans sa direction d'incidence. Par conséquent, chacun des coins de cube C va renvoyer un mince faisceau de lumière vers l'optique L.

Ces faisceaux sont tous parallèles entre eux. Chacun de ces faisceaux passe à travers l'ensemble optique constitué des objectifs de projection et de réception L et L' et la lame semi-réfléchissante $L_{SR}$. Les faisceaux, à la sortie de l'objectif L' sont, de nouveau, parallèles entre eux et tombent sur un détecteur matriciel D qui recueille donc l'image de chaque réflecteur C. Le détecteur D est, par exemple, une matrice CCD (Charge Coupled Device). Sur la figure 1, seuls deux des trois faisceaux sont représentés par souci de clarté de la figure. Ils sont issus des coins de cube C1 et C2. On démontre que la direction du rayon central de chaque faisceau réfléchi passe en permanence par le sommet SC d'un réflecteur C quelle que soit l'orientation du réflecteur par rapport au faisceau d'éclairage. Le centre P de la tache lumineuse projetée sur le détecteur D indique donc en permanence la direction du sommet SC du coin de cube par rapport au détecteur.

Les images respectives des sommets SC1 et SC2 des coins de cube C1 et C2 sont donc situées en P1 et P2 sur le détecteur D.

Les positions des points P1 et P2 sur le détecteur D ne dépendent pas des abscisses x de C1 et de C2.

Le grand intérêt de cette disposition optique est que l'écart entre les positions de P1 et de P2 ne dépend pas des translations du casque H, mais uniquement de son orientation. Connaissant la longueur d12, distance séparant les sommets SC1 et SC2 des coins de cube C1 et C2, l'orientation inconnue de l'axe C1 C2 est donc entièrement déterminée au signe près, par la position relative de P2 par rapport à P1 sur le détecteur D.

Plus précisément, le casque H est équipé de trois coins de cube C1, C2 et C3 de sommets SC1, SC2 et SC3. Les distances d12 séparant les sommets SC1 et SC2 et d13 séparant les sommets SC1 et SC3 sont connues. On peut choisir par exemple et pour simplifier, que l'axe C1 C2 soit perpendiculaire à C1C3. La détermination de l'orientation reste possible si les axes C1 C2 et C1 C3 font un autre angle entre eux, le calcul est simplement un peu plus compliqué.

La face avant de chaque réflecteur est équipée d'un dispositif de discrimination optique ou géométrique différent de celui des deux autres.

A titre de premier exemple, on peut discriminer les réflecteurs par leur forme. Le contour de la section transversale de chaque réflecteur est alors particularisé à l'aide d'un cache de forme particulière, en cercle ou en losange, par exemple, occultant partiellement les faisceaux incident et réfléchi.

A titre de second exemple, on peut discriminer les réflecteurs par leur couleur. Un filtre coloré rouge, vert, bleu ou jaune est placé devant chacun des réflecteurs. Il faut, bien entendu, dans ce cas, utiliser une source à spectre large et un détecteur polychromatique ou plusieurs détecteurs séparés par des lames dichroïques, chaque détecteur étant dédié à une bande spectrale particulière. Il est à noter que le terme de « couleur » ne se limita pas nécessairement au spectre visible. On peut également utiliser deux bandes spectrales différentes situées dans le proche infrarouge ou dans l'ultraviolet proche.

On peut bien entendu combiner les deux modes de discrimination : forme et couleur. Ainsi, un premier réflecteur comportera un cache circulaire rouge, un second réflecteur comportera un cache circulaire vert et un troisième réflecteur comportera un cache rouge ou un cache vert en forme de losange.

Par ce moyen, on peut attribuer sur le détecteur D les points P1, P2 et P3 aux sommets correspondants sans risque d'erreurs.

Sur le détecteur D, les coordonnées mesurées dans le repère fixe (O, x, y, z) des points P1, P2 et P3, images des sommets SC1, SC2 et SC3, sont les suivantes :

$$P1(y1, z1), P2(y2, z2) \text{ et } P3(y3, z3)$$

Pour un afocal, par exemple de grossissement unitaire, la projection parallèlement à l'axe x sur le plan vertical D relie les composantes inconnues (x12, y12, z12) du vecteur C1 C2 de longueur d12 connue aux coordonnées de P1 et P2 par les relations :

$$y12 = (y1\text{-}y2)$$

$$z12 = (z1\text{-}z2)$$

$$x12 = \varepsilon \, [d12^2\text{-}(y1\text{-}y2)^2\text{-}(z1\text{-}z2)^2]^{0.5} \quad \text{avec } \varepsilon = +/\text{-}1$$

De même, les composantes (x31, y31, z31) du vecteur C1 C3 sont :

$$y13 = (y1\text{-}y3)$$

$$z13 = (z1\text{-}z3)$$

$$x13 = \varepsilon' \, [d13^2\text{-}(y1\text{-}y3)^2\text{-}(z1\text{-}z3)^2]^{0.5} \quad \text{avec } \varepsilon' = +/\text{-}1$$

L'indétermination sur les valeurs de $\varepsilon$ et de $\varepsilon'$ est partiellement levée par la relation suivante:

C1 C2 est perpendiculaire à C1 C3, donc :

$$x12.x13 + y12.y13 + z12.z13 = 0,$$

soit encore :
Signe de (x12.x13)= $\varepsilon.\varepsilon'$ = - signe de (y12.y131 + z12.z13) ;

Il ne reste plus alors que deux solutions symétriques par rapport au plan vertical (y, z).

Il existe différentes techniques permettant de lever cette dernière indétermination. A titre de premier exemple, il est possible d'ajouter un quatrième coin de cube C4 dont le sommet est non coplanaire à celui des trois autres. Les quatre coins de cube forment alors un tétraèdre.

A titre de second exemple illustré en figure 2, l'indétermination restante peut également être levée par l'adjonction d'une deuxième source S' dans le plan focal de l'objectif qui, définissant une deuxième direction de projection, génère trois autres images P'1, P'2 et P'3 sur le détecteur D ou sur un deuxième détecteur D'. Sur la figure 2, par souci de clarté, la lame semi-réfléchissante $L_{SR}$ n'est pas représentée. Les rayons lumineux issus de cette source S' sont représentés en pointillés.

La source S' est, par exemple, sur la verticale de la source S, l'axe oblique de projection correspondant est parallèle au plan vertical (x, z), son orientation $\theta$ est donnée en fonction de la distance focale f de L et L' par la relation classique tg$\theta$ = S'S/f

Pour P'1 et P'2, on a la relation :

$$z12' = (z'1-z'2) + x12.tg\theta$$

Pour P1 et P2, on a la relation :

$$z12 = (z1-z2)$$

Donc x12 est donné par l'égalité non ambiguë :

$$x12 = [(z1-z2) - (z'1-z'2)]/tg\theta$$

Pour isoler les images de la source S' de celles de la source S, la source S' peut, par exemple, être centrée sur une autre longueur d'onde, une autre polarisation ou être activée en alternance avec S.

Dans le premier cas, chaque source S et S' rayonne selon une couleur déterminée. Devant chaque pixel du détecteur D est alors placé un filtre coloré ou on utilise deux détecteurs combinés par des miroirs dichroïques. Dans ce cas, il est préférable que les réflecteurs soient discriminés par la forme.

Dans le second cas, la discrimination des sources est faite par la polarisation. Les deux sources de même couleur rayonnent alors soit selon deux directions croisées de polarisation linéaire, soit selon deux sens opposés de polarisation circulaire. On utilise alors deux détecteurs combinés par un séparateur de polarisation. Les coins de cube sont métallisés pour conserver la polarisation incidente.

Dans le dernier cas, les deux sources sont activées en alternance et l'analyse d'image sur le détecteur se fait séparément sur deux images successives.

Une fois levée cette indétermination de signe par une des deux méthodes décrites ci-dessus, le dispositif permet de déterminer, sans ambiguïtés, les composantes des vecteurs C1C2 et C1C3, fixes sur le casque, et donc l'orientation du casque dans l'espace.

Par comparaison, un système à projection centrale comprenant une caméra à mise au point à distance fixe ne forme l'image P1 de la face avant de C1 ou d'une diode équivalente sur le plan du détecteur D que pour une seule position du casque. En outre, pour cette position du casque, l'image de la face avant de C2 n'est sur le détecteur que pour une orientation particulière de C1 C2 et par conséquent seulement pour des orientations particulières du casque.

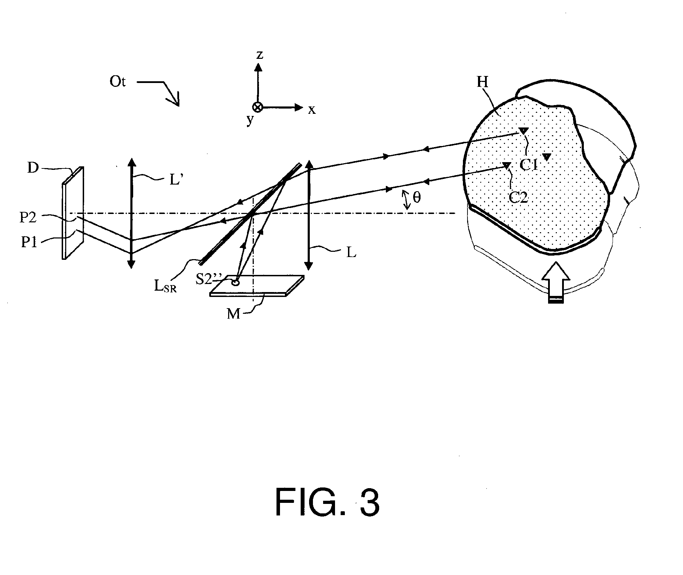

L'objectif de projection L doit avoir un diamètre d'ouverture suffisant pour couvrir toute la zone de débattement du casque. Afin d'éviter l'emploi de trop grands diamètres, on peut utiliser la disposition représentée en figure 3.

La source S est remplacée par une matrice M de sources lumineuses S". La matrice M est positionnée sur plan focal de L par réflexion sur la lame semi-réfléchissante $L_{SR}$.

En mode de fonctionnement standard, une seule source S1 " est allumée sur la matrice M. Lorsque le casque change de position comme représenté en pointillés sur la figure 3, les images P1 et P2 arrivent en bord du détecteur. Cette configuration est repérable par un simple traitement d'image. Dans ce cas, la source S1 " initialement active est éteinte et une autre source S2" est allumée afin de recentrer par construction les images P1 et P2 sur le centre du détecteur D.

L'axe de projection est oblique, son orientation $\theta$ est connue. Par exemple, dans le plan vertical (x, z), l'orientation $\theta$ est donnée par :

tg$\theta$=S"S"$_0$/f. S"$_0$ étant le point de la matrice, généralement son centre, situé sur l'axe optique du système afocal. Les trois relations précédentes pour C1 C2 deviennent alors :

$$y12 = (y1\text{-}y2)$$

$$z12 = (z1\text{-}z2) + x12.tg\theta$$

$$d12^2 = x12^2 + (y1\text{-}y2)^2 + [(z1\text{-}z2) + x12.tg\theta]^2$$

La dernière égalité fournit, comme précédemment deux valeurs de x12, donc deux solutions pour le vecteur C1C2. Elles ne sont plus symétriques par rapport au plan vertical (y, z).

Une façon simple de lever l'ambigüité est d'utiliser deux sources de la matrice que l'on allume successivement pour déterminer une orientation du casque.

Le dispositif selon l'invention permet d'atteindre des précisions importantes. A titre d'exemple, pour un champ angulaire de 45 degrés et un détecteur de 1000 points par 1000 points, on obtient une précision de 0,045 degré, soit 0,7 mrad, ce qui est une précision suffisante pour une grande majorité d'applications.

Le casque peut donc remplacer la fonction viseur tête-haute qui possède une haute précision au centre du domaine angulaire et dans un large domaine de positions de tête.

On peut également hybrider, au centre du domaine angulaire, le dispositif de détection de posture optique selon l'invention avec une détection de posture électromagnétique qui est moins précise mais possède un domaine de mesure très large.

**Revendications**

1.   Système de détection de la posture d'un objet mobile (H) dans l'espace comprenant un dispositif fixe électro-optique (Ot) d'orientation connue comprenant au moins une première source (S) d'émission ponctuelle et un capteur matriciel photosensible (D) et, disposé sur l'objet mobile, un ensemble comprenant trois dispositifs rétroréfléchissants de type « coin de cube » (C1, C2, C3),
**caractérisé en ce que** le dispositif fixe électro-optique comporte une optique télécentrique comprenant essentiellement un objectif de projection (L), un objectif de réception (L') et un élément optique semi-réfléchissant (L$_{SR}$) agencés de façon que :

la première source d'émission ponctuelle (S) soit disposée au foyer de l'objectif de projection (L) par réflexion ou par transmission à travers l'élément optique semi-réfléchissant (L$_{SR}$),
l'image de la première source d'émission ponctuelle (S) soit disposée au foyer de l'objectif de réception (L') par transmission ou par réflexion à travers l'élément optique semi-réfléchissant (LSR),
le sytème de détection étant configuré pour déterminer ladite posture, se basant sur les écarts entre les images desdits trois dispositifs rétroréfléchissants sur ledit capteur matriciel photosensible.

2.   Système de détection de la posture d'un objet mobile selon la revendication 1, **caractérisé en ce que** la première source d'émission ponctuelle (S) ou son image est disposée sur l'axe optique commun à l'objectif de projection (L) et à l'objectif de réception (L').

3.   Système de détection de la posture d'un objet mobile selon la revendication 2, **caractérisé en ce que** le système comporte une seconde source d'émission ponctuelle (S'), la seconde source d'émission ponctuelle ou son image étant disposée hors de l'axe optique commun à l'objectif de projection (L) et à l'objectif de réception (L').

4.   Système de détection de la posture d'un objet mobile selon la revendication 3, **caractérisé en ce que** la première source (S) émettant dans une première bande spectrale, la seconde source (S') émet dans une seconde bande spectrale différente de la première bande spectrale de la première source.

5.   Système de détection de la posture d'un objet mobile selon la revendication 3, **caractérisé en ce que** la première source (S) émettant une lumière dans un premier état de polarisation prédéterminé, la seconde source (S') émet une lumière dans un second état de polarisation prédéterminé différent du premier état de polarisation prédéterminé.

6. Système de détection de la posture d'un objet mobile selon la revendication 3, **caractérisé en ce que** la première source d'émission (S) et la seconde source d'émission (S') émettent à des instants différents

7. Système de détection de la posture d'un objet mobile selon la revendication 1, **caractérisé en ce que** le dispositif fixe comporte une matrice (M) de sources d'émission ponctuelles.

8. Système de détection de la posture d'un objet mobile selon la revendication 1, **caractérisé en ce que** l'objet mobile (H) comporte au moins quatre dispositifs rétroréfléchissants de type « coin de cube » (C1, C2, C3, C4).

9. Système de détection de la posture d'un objet mobile selon l'une des revendications 1 ou 8, **caractérisé en ce que** chacun des dispositifs rétroréfléchissants de type coin de cube (C1, C2, C3, C4) disposés sur l'objet mobile comporte des moyens de discrimination optique ou géométrique différent de ceux des autres coins de cube.

10. Système de détection de la posture d'un objet mobile selon la revendication 9, **caractérisé en ce que** chaque coin de cube (C1, C2, C3, C4) comporte un cache de forme différente de celle des deux autres coins de cube.

11. Système de détection de la posture d'un objet mobile selon la revendication 9, **caractérisé en ce que** chaque coin de cube (C1, C2, C3, C4) comporte un filtre optique dont la bande spectrale de transmission est différente de celle des deux autres filtres des deux autres coins de cube.

12. Système de détection de la posture d'un objet mobile selon l'une des revendications précédentes, caractérisé en ce q'uil est adapté pour être monté sur un casque de pilote (H).

## Patentansprüche

1. System zum Erkennen der Haltung eines mobilen Objekts (H) im Raum, das eine feste elektrooptische Vorrichtung (Ot) mit bekannter Orientierung umfasst, das wenigstens eine erste punktförmige Emissionsquelle (S) und einen fotosensiblen Matrixsensor (D) umfasst, und auf dem mobilen Objekt angeordnet eine Baugruppe, die drei zurückreflektierende Vorrichtungen des "Würfelecke"-Typs (C1, C2, C3) umfasst,
**dadurch gekennzeichnet, dass** die feste elektrooptische Vorrichtung eine telezentrische Optik umfasst, die im Wesentlichen ein Projektionsobjektiv (L), ein Empfangsobjektiv (L') und ein halbreflektierendes optisches Element ($L_{SR}$) umfasst, so ausgelegt, dass:

die erste punktförmige Emissionsquelle (S) im Brennpunkt des Empfangsobjektivs (L') durch Reflexion oder durch Transmission durch das halbreflektierende optische Element ($L_{SR}$) angeordnet ist,
wobei das Bild der ersten punktförmigen Emissionsquelle (S) im Brennpunkt des Empfangsobjektivs (L') durch Transmission oder durch Reflexion durch das halbreflektierende optische Element ($L_{SR}$) angeordnet ist,
wobei das Erkennungssystem zum Ermitteln der Haltung auf der Basis der Abstände zwischen den Bildern der drei zurückreflektierenden Vorrichtungen auf dem fotosensiblen Matrixsensor konfiguriert ist.

2. System zum Erkennen der Haltung eines mobilen Objekts nach Anspruch 1, **dadurch gekennzeichnet, dass** die erste punktförmige Emissionsquelle (S) oder ihr Bild auf der gemeinsamen optischen Achse mit dem Projektionsobjektiv (L) und dem Empfangsobjektiv (L') angeordnet ist.

3. System zum Erkennen der Haltung eines mobilen Objekts nach Anspruch 2, **dadurch gekennzeichnet, dass** das System eine zweite punktförmige Emissionsquelle (S') umfasst, wobei die zweite punktförmige Emissionsquelle oder ihr Bild außerhalb der gemeinsamen optischen Achse mit dem Projektionsobjektiv (L) und dem Empfangsobjektiv (L') angeordnet ist.

4. System zum Erkennen der Haltung eines mobilen Objekts nach Anspruch 3, **dadurch gekennzeichnet, dass**, wenn die erste Quelle (S) in einem ersten Spektralband emittiert, die zweite Quelle (S') in einem zweiten Spektralband emittiert, das sich vom ersten Spektralband der ersten Quelle unterscheidet.

5. System zum Erkennen der Haltung eines mobilen Objekts nach Anspruch 3, **dadurch gekennzeichnet, dass**, wenn die erste Quelle (S) ein Licht in einem ersten vorbestimmten Polarisationszustand emittiert, die zweite Quelle (S') ein Licht in einem zweiten vorbestimmten Polarisationszustand emittiert, der sich vom ersten vorbestimmten Polarisationszustand unterscheidet.

6. System zum Erkennen der Haltung eines mobilen Objekts nach Anspruch 3, **dadurch gekennzeichnet, dass** die erste Emissionsquelle (S) und die zweite Emissionsquelle (S') zu unterschiedlichen Zeitpunkten emittieren.

7. System zum Erkennen der Haltung eines mobilen Objekts nach Anspruch 1, **dadurch gekennzeichnet, dass** die feste Vorrichtung eine Matrix (M) von punktförmigen Emissionsquellen umfasst.

8. System zum Erkennen der Haltung eines mobilen Objekts nach Anspruch 1, **dadurch gekennzeichnet, dass** das mobile Objekt (H) wenigstens vier zurückreflektierende Vorrichtungen des "Würfelecke"-Typs (C1, C2, C3, C4) umfasst.

9. System zum Erkennen der Haltung eines mobilen Objekts nach Anspruch 1 oder 8, **dadurch gekennzeichnet, dass** jede der zurückreflektierenden Vorrichtungen des Würfeleckentyps (C1, C2, C3, C4), die auf dem mobilen Objekt angeordnet sind, Mittel zum optischen oder geometrischen Unterscheiden umfasst, die sich von denen von anderen Würfelecken unterscheiden.

10. System zum Erkennen der Haltung eines mobilen Objekts nach Anspruch 9, **dadurch gekennzeichnet, dass** jede Würfelecke (C1, C2, C3, C4) eine Maske von anderer Form als die der beiden anderen Würfelecken umfasst.

11. System zum Erkennen der Haltung eines mobilen Objekts nach Anspruch 9, **dadurch gekennzeichnet, dass** jede Würfelecke (C1, C2, C3, C4) einen optischen Filter umfasst, dessen Transmissionsspektralband sich von dem der zwei anderen Filter der zwei anderen Würfelecken unterscheidet.

12. System zum Erkennen der Haltung eines mobilen Objekts nach einem der vorherigen Ansprüche, **dadurch gekennzeichnet, dass** es zur Montage an einem Pilotenhelm (H) ausgelegt ist.

**Claims**

1. System for detecting the attitude of a movable object (H) in space, comprising a fixed electro-optical device (Ot) having a known orientation which comprises at least a first local emission source (S) and a photosensitive matrix sensor (D) and, in a state arranged on the movable object, an assembly comprising three retro-reflective devices of the "cube comer" type (C1, C2, C3),
**characterised in that** the fixed electro-optical device comprises a telecentric optical system which substantially comprises a projection objective lens (L), a receiving objective lens (L') and a semi-reflective optical element ($L_{SR}$) which are arranged in such a manner that:

the first local emission source (S) is arranged at the centre of the projection objective leans (L) by means of reflection or by means of transmission through the semi-reflective optical element ($L_{SR}$),
the image of the first local emission source (S) is arranged at the centre of the receiving objective lens (L') by means of transmission or by means of reflection through the semi-reflective optical element ($L_{SR}$),
the detection system being configured to determine the attitude on the basis of the discrepancies between the images of the three retro-reflective devices on the photosensitive matrix sensor.

2. System for detecting the attitude of a movable object according to claim 1, **characterised in that** the first local emission source (S) or the image thereof is arranged on the optical axis common to the projection objective lens (L) and the receiving objective lens (L').

3. System for detecting the attitude of a movable object according to claim 2, **characterised in that** the system comprises a second local emission source (S'), the second local emission source or the image thereof being arranged outside the optical axis common to the projection objective lens (L) and the receiving objective lens (L').

4. System for detecting the attitude of a movable object according to claim 3, **characterised in that** the first source (S) transmits in a first spectral range, the second source (S') transmits in a second spectral range which is different from the first spectral range of the first source.

5. System for detecting the attitude of a movable object according to claim 3, **characterised in that**, the first source (S) transmitting a light in a first predetermined polarisation state, the second source (S') transmits a light in a second predetermined polarisation state which is different from the first predetermined polarisation state.

6. System for detecting the attitude of a movable object according to claim 3, **characterised in that** the first emission source (S) and the second emission source (S') transmit at different times.

7. System for detecting the attitude of a movable object according to claim 1, **characterised in that** the fixed device comprises a matrix (M) of local emission sources.

8. System for detecting the attitude of a movable object according to claim 1, **characterised in that** the movable object (H) comprises at least four retro-reflective devices of the "cube comer" type (C1, C2, C3, C4).

9. System for detecting the attitude of a movable object according to claim 1 or claim 8, **characterised in that** each of the retro-reflective devices of the cube corner type (C1, C2, C3, C4) arranged on the movable object comprises means for optical or geometric discrimination different from those of the other cube corners.

10. System for detecting the attitude of a movable object according to claim 9, **characterised in that** each cube corner (C1, C2, C3, C4) comprises a mask which has a different shape from that of the other two cube corners.

11. System for detecting the attitude of a movable object according to claim 9, **characterised in that** each cube corner (C1, C2, C3, C4) comprises an optical filter whose spectral transmission range is different from that of the other two filters of the other two cube corners.

12. System for detecting the attitude of a movable object according to any one of the preceding claims, **characterised in that** it is suitable for being mounted on a pilot's helmet (H).

FIG. 1

FIG. 2

# FIG. 3